# EUROPEAN PATENT SPECIFICATION

(11) **EP 0 370 609 B1**
(45) Date of publication and mention of the grant of the patent: **02.06.1993**
(21) Application number: 89310182.4
(22) Date of filing: 05.10.1989
(51) Int. Cl.: B65G 27/34, B65G 47/34

(54) **Vibratory conveyor**
Vibrationsförderer
Transporteur à vibrations

(30) Priority: 11.10.1988 GB 8823832
(43) Date of publication of application: 30.05.1990
(73) Proprietor: WRIGHT MACHINERY COMPANY LIMITED, Uxbridge, UB8 2SH (GB)
(72) Inventor: Mount, Michael John, Uxbridge, UB8 2SH (GB)
(74) Representative: Charlton, Peter John

(56) References cited:
- AU-D- 2 406 077
- DE-A- 2 052 013
- GB-A- 1 245 164
- GB-A- 2 101 950
- GB-A- 2 155 885
- US-A- 3 543 916

## Description

This invention relates to a vibratory conveyor and more particularly to a vibratory conveyor which permits movement of product in the normal direction of flow for such a conveyor, and also permits discharge of product through a side aperture of the conveyor, moving the product transversely to the normal direction of flow.

Vibratory conveyors are generally used industrially to move fragile, small or lightweight articles from one point to another. An example of a distribution system is that normally used in the snack food and crisp industries where a series of main line conveyors transport products to crossfeeder conveyors set at right angles to the main line conveyors, each crossfeeder conveyor supplying a packaging machine. The interface between the main line conveyors and crossfeeder conveyors needs to be arranged so that product can either be conveyed to the next main line conveyor, or to the crossfeeder conveyor, or to both conveyors simultaneously.

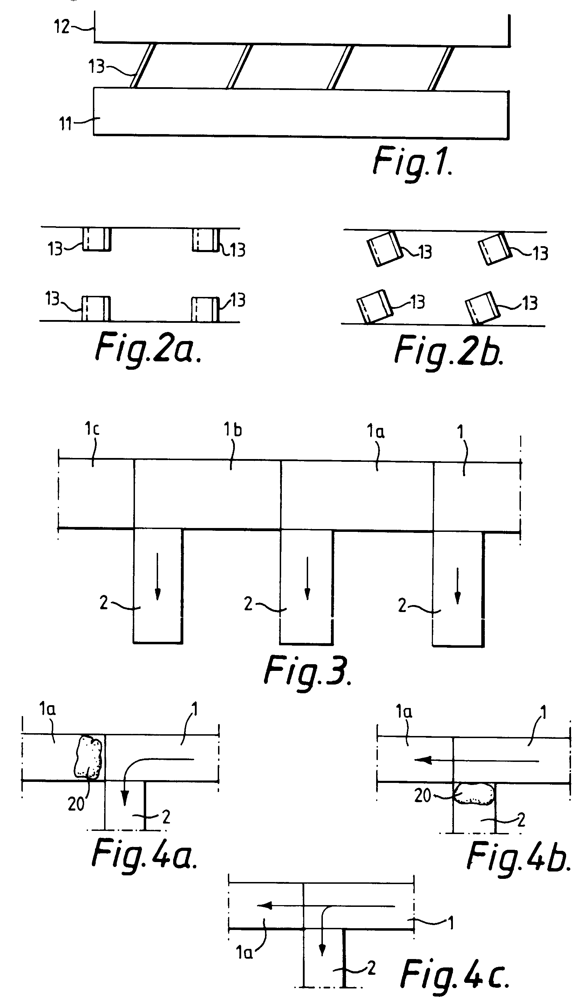

One known type of main conveyor is shown diagrammatically in Figures 1 and 2a. The type of conveyor comprises a frame 11, a tray 12 for receiving product, the tray being mounted to the frame by resilient means comprising at least on flexure 13 inclined to the vertical, and a drive system (not shown) to vibrate the tray within the path defined by the flexure. The flexures are typically fibre glass leaf springs, and the consequences of the arrangement is that product is thrown forward in the direction of conveyance with each cycle of the drive system. The springs are arranged so that product is conveyed along the tray, i.e. the direction of vibration is along the tray's length.

The crossfeeders are generally arranged so that their upstream ends are located at the downstream ends of the main line conveyors. If the crossfeeder intrudes into the main line, then it is necessary for product to pass across the crossfeeder from one main line conveyor to the next, except in the case of the last crossfeeder or in a case where no product is required downstream of a particular crossfeeder. For this purpose either the crossfeeder must be capable of conveying product transversely with respect to its length, as well as along its length, or one has to rely on the product being pushed across the crossfeeder by the force exerted on it by product which is still on the main line conveyor on the upstream side. Alternatively, the main conveyors may be butted against one another with side discharge apertures onto the crossfeeders. With present equipment, feeding onto a crossfeeder is most normally achieved either with a diverter which encourages product towards the aperture or by inclining the main conveyor (as in GB-A-2101950) so that product falls through the aperture. Both these arrangements require increased mechanical complexity and the inclined conveyor system results in increased grading by size of the particles of product. It is an object of the invention to provide a simple mechanism by means of which the above problems can be overcome.

According to the invention there is provided a vibratory conveyor system for transporting a product, comprising at least one main line conveyor extending in a longitudinal direction, a crossfeeder conveyor extending transversely from a lateral edge of the downstream end of the main line conveyor; vibratory means for imparting to at least the upstream end of the main line conveyor a vibratory movement having a component tending to transport product longitudinally along the main line conveyor; and means provided wherein the crossfeeder conveyor meets the main line conveyor for permitting product to pass from the main line conveyor to the crossfeeder conveyor;
characterised in that the vibratory component imparted by the vibratory means also has a component tending to transport product toward said lateral edge.

In the accompanying diagrammatic drawings:
Figure 1 is a side elevation of a conventional vibratory conveyor, as already mentioned;
Figure 2a and 2b are plan views of the spring arrangement of Figure 1 and spring arrangement which may be used in the invention;
Figure 3 is a plan view of a typical arrangement of a main conveyor and a number of crossfeeders;
Figures 4a to 4c are plan views showing three alternative feeding configurations which the conveyor of the invention may adopt; and
Figures 5a and 5b are sectional and plan views of an alternative embodiment of the vibration means of the invention.

Referring first to Figure 3, it will be seen that there is a succession of main line conveyors 1, 1a, 1b, 1c arranged one after the other, with a cross feeder 2 at the downstream end of each main line conveyor, except, optimally, the one furthest downstream. The upstream ends of the crossfeeders 2 are disposed laterally of the main line conveyors. Where each crossfeeder adjoins its respective main line conveyor there is an aperture in the side wall of the tray 12 of the main line conveyor to allow product to pass from the main line conveyor on to the crossfeeder.

As shown in Figure 2b, the mountings of the springs 13 on both the frame and tray, when viewed from above, are angled. As a consequence the major component of vibration is in the usual longitudinal direction but there is also a smaller component of vibration at right angles to this. This latter component encourages product to move to one side of the tray. Hence, when there is an aperture in the side wall of the tray an amount of product falls through the aperture onto the adjacent crossfeeder conveyor 2. The amount of product falling through the aperture depends on the offset angle of the leaf springs and on the width of the aperture.

If the main line conveyor 1 is energised and the next main line conveyor 1a is not energised, then, when the crossfeeder 2 requires product, and is energised, a small mound 20 of product forms on the unenergised conveyor and all the product moving along the energised main line conveyor will fall through the aperture, being prevented from further forward movement by the mound of product. This is shown in Figure 4a.

If the main line conveyors 1 and 1a are both energised and the crossfeeder is deenergised, then a mound 20 of product forms on the crossfeeder preventing any product from falling through the aperture, so all the product passes from one main conveyor to the next. This is shown in Figure 4b.

If the main line conveyors 1 and 1a are both energised, and the crossfeeder is energised then some of the product falls onto the crossfeeder and some passes to the next main line conveyor. This is shown in Figure 4c.

Each of the main line conveyors is of the type shown in Figures 1 and 2b except, optionally, the one furthest downstream.

If it is required that no product should pass onto a particular crossfeeder for a period of time, then a gate can be inserted, either manually or by some power driven means, into the aperture adjacent to that crossfeeder.

Although the above description refers specifically to the use of leaf springs to mount the main conveyor, on the base, other means, for example rubber mounts, could be used instead.

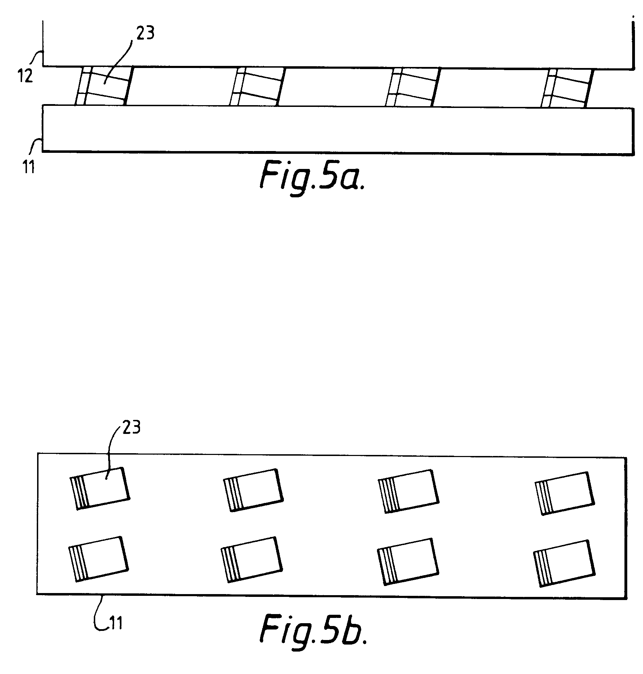

Figure 5a and 5b show a conveyor comprising, as in the previous embodiment, a frame 11, a tray 12 for receiving product, and rubber mounts 23 supporting the tray on the frame. The rubber mounts 13 may be driven in the same way as the leaf springs 13 described earlier.

If the rubber mounts have a preferred direction of vibration (as illustrated) it is possible, as is case for the leaf springs, for the drive means to apply a force parallel to the length of the main line conveyors; the resulting vibration will still contain a component of vibration at right angles to the length of the main line conveyors, provided the rubber mounts are correctly disposed. If the rubber mounts have no such preferred direction of vibration then they must be driven in a direction which is inclined at an acute angle to the length of the main line conveyors. This can be achieved either by using a single drive means which applies drive at the requisite angle, or by using two drives acting transversely to one another to provide respectively the longitudinal and lateral vibration.

## Claims

1. A vibratory conveyor system for transporting a product, comprising at least one main line conveyor extending in a longitudinal direction (1,1a,1b,1c), a crossfeeder conveyor (2) extending transversely from a lateral edge of the downstream end of the main line conveyor (1,1a,1b); vibratory means for imparting to at least the upstream end of the main line conveyor a vibratory movement having a component tending to transport product longitudinally along the main line conveyor (1,1a,1b,1c); and means provided wherein the crossfeeder conveyor (2) meets the main line conveyor (1,1a,1b,1c) for permitting product to pass from the main line conveyor to the crossfeeder conveyor;
characterised in that the vibratory component imparted by the vibratory means also has a component tending to transport product toward said lateral edge.

2. A conveyor system according to claim 1, wherein the said means to pass to the crossfeeder conveyor (2) is an aperture in a side wall of the main line conveyor (1,1a,1b).

3. A conveyor system according to claim 2, wherein a gate is provided for selectively closing the said aperture.

4. A conveyor system according to any preceding claim, wherein at least the upstream one of the main line conveyors (1) comprises a base (11) and a product-carrying tray (12) connected thereto by resilient mountings (23).

5. A conveyor system according to claim 4, wherein the resilient mountings (23) are leaf springs arranged so that their natural direction of flexture is at an acute angle to the longitudinal direction of the main line conveyors (1,1a,1b,1c).

6. A conveyor system according to claim 4, wherein the resilient mounts (23) are rubber mounts arranged so that their natural direction of flexure is at an acute angle to the longitudinal direction of the main line conveyors (1,1a,1b,1c).

7. A conveyor system according to claim 4, wherein the tray (12) is driven vibratably with respect to the base (11) by two drive means each providing a respective one of the said components of movement.

8. A conveyor system according to any preceding claim, comprising at least two main line conveyors (1,1a,), the crossfeeder conveyor being provided at the downstream end of the upstream one (1) of the two main line conveyors.

9. A conveyor system according to any preceding claims, wherein there are more than two of the said main line conveyors (1,1a,1b,1c) arranged end-to-end, each except, optionally, the one furthest downstream (1c) being of the same type as the said upstream one of the two main line conveyors and each, optionally, having a respective crossfeeder conveyor (2) extending laterally therefrom.

## Patentansprüche

1. Vibrationsfördersystem zum Transportieren eines Produktes, mit wenigstens einem Hauptlinienförderer (1,1a,1b,1c), einem sich quer von einer Seitenkante des stromabwärts gelegenen Endes des Hauptlinienförderers (1,1a,1b) erstreckenden Querzuführförderer (2); einer Vibrationseinrichtung zum Erteilen einer Vibrationsbewegung mindestens an das stromaufwärts gelegene Ende des Hauptlinienförderers, mit einer Komponente, die Produkte in Längsrichtung entlang des Hauptlinienförderers (1,1a,1b,1c) transportiert; und einer vorgesehenen Einrichtung, an der der Querzuführforderer (2) auf den Hauptlinienförderer (1,1a,1b,1c) trifft, so daß die Produkte von dem Hauptlinienförderer zu dem Querzuführförderer übertragen werden können;
**dadurch gekennzeichnet,**
daß die von der Vibrationseinrichtung erteilte Vibrationskomponente auch eine Komponente aufweist, die Produkte zu der Seitenkante transportiert.

2. Fördersystem nach Anspruch 1, bei dem die Einrichtung zum Übertragen zu dem Querzuführförderer (2) eine Öffnung in einer Seitenwand des Hauptlinienförderers (1,1a,1b) ist.

3. Fördersystem nach Anspruch 2, bei dem eine Sperre zum selektiven Schließen der Öffnung vorgesehen ist.

4. Fördersystem nach einem der vorhergehenden Ansprüche, bei dem wenigstens der stromaufwärts gelegene der Hauptlinienförderer (1) eine Basis (11) und eine damit durch elastische Befestigungsteile (23) verbundene produkttragende Platte (12) aufweist.

5. Fördersystem nach Anspruch 4, bei dem die elastischen Befestigungsteile (23) Blattfedern sind, die derart angeordnet sind, daß ihre natürliche Biegungsrichtung in spitzem Winkel zu der Längsrichtung der Hauptlinienförderer (1,1a,1b,1c) verläuft.

6. Fördersystem nach Anspruch 4, bei dem die elastischen Befestigungsteile (23) Gummibefestigungsteile sind, die derart angeordnet sind, daß ihre natürliche Biegungsrichtung in spitzem Winkel zu der Längsrichtung der Hauptlinienförderer (1,1a,1b,1c) verläuft.

7. Fördersystem nach Anspruch 4, bei dem die Platte (12) in bezug auf die Basis (11) vibrierend von zwei Antriebseinrichtungen getrieben ist, von denen jede jeweils eine der Bewegungskomponenten liefert.

8. Fördersystem nach einem der vorhergehenden Ansprüche, mit wenigstens zwei Hauptlinienfördern (1,1a), wobei der Querzuführförderer an dem stromabwärts gelegenen Ende des stromaufwärts gelegenen (1) der zwei Hauptlinienförderer vorgesehen ist.

9. Fördersystem nach einem der vorhergehenden Ansprüche, bei dem mehr als zwei der Hauptlinienförderer (1,1a,1b,1c) hintereinander angeordnet sind, wobei jeder, außer wahlweise dem am meisten stromabwärts gelegenen (1c), von gleicher Art ist wie der stromaufwärts gelegene der zwei Hauptlinienförderer und wobei jeder wahlweise jeweils einen seitlich von ihm abgehenden Querzuführförderer (2) aufweist.

## Revendications

1. Un système de convoyeur à vibrations pour le transport d'un produit, comprenant au moins une ligne principale de convoyeur, se projetant dans une direction longitudinale, (1, 1a, 1b, 1c), un convoyeur transversal d'alimentation (2) se projetant transversalement à partir d'un bord latéral de l'extrémité aval de la ligne principale de convoyeur (1, 1a, 1b), un moyen de génération de vibrations servant à impartir au moins à l'une des extrémités amont de la ligne principale de convoyeur un mouvement vibratoire et comportant un composant ayant tendance à transporter le produit longitudinalement le long de la ligne principale de convoyeur (1, 1a, 1b, 1c); et un moyen logé à l'intérieur du convoyeur latéral d'alimentation (2) qui rejoint la ligne principale de convoyeur (1, 1a, 1b, 1c) pour permettre au produit de passer de la ligne principale de convoyeur au convoyeur latéral d'alimentation;
caractérisé par le fait que la composante vibratoire impartie par le moyen de génération de vibrations comporte aussi une composante ayant tendance à déporter le produit transtorté vers ledit bord latéral.

2. Un système de convoyeur selon la revendication 1, dans lequel ledit moyen de passage au convoyeur latérale d'alimentation (2) est une ouverture dans la paroi latérale de la ligne principale de convoyeur (1, 1a, 1b).

3. Un système de convoyeur selon la revendication 2, qui comporte une porte permettant de fermer ladite ouverture de manière sélective.

4. Un système de convoyeur selon n'importe laquelle des revendications ci-dessus mentionnées, dans lequel au moins le convoyeur amont de la ligne principale de convoyeur (1) comprend une base (11) et un plateau support de produit (12) relié à ladite base par des montants flexibles (23).

5. un système de convoyeur selon la revendication 4, dans lequel les montants flexibles (23) sont des ressorts à lames disposés de manière à ce que leur direction naturelle de flexion forme un angle aigu par rapport à la direction longitudinale des lignes principales de convoyeurs (1, 1a, 1b, 1c).

6. Un système de convoyeur selon la revendication 4, dans lequel les montants flexibles (23) sont en caoutchouc et disposés de façon à ce que leur direction naturelle de flexion forme un angle aigu par rapport à la direction longitudinale des lignes principales de convoyeurs (1, 1a, 1b, 1c).

7. Un système de convoyeur selon la revendication 4, dans lequel le plateau (12) est soumis à des vibrations par rapport à la base (11) par deux moyens de génération de vibrations chacun d'entre eux constituant l'une des composantes dudit mouvement.

8. Un système de convoyeur selon l'une quelconque des revendications précédentes, comprenant au moins deux lignes de convoyeurs (1, 1a), le convoyeur latéral d'alimentation étant disposé à l'extrémité aval de la ligne de convoyeur amont (1) desdites deux lignes principales de convoyeurs.

9. Un système de convoyeur selon n'importe laquelle des revendications précédentes, comprenant plus de deux lignes principales de convoyeur (1, 1a, 1b, 1c) disposées les unes au bout des autres, chacune d'entre elles à l'exception, le cas échéant, de celle occupant la position la plus en aval de toutes (1c), étant de même type et chacune d'elle pouvant, le cas échéant, recevoir un convoyeur latéral d'alimentation (2) se projetant latéralement à partir de chaque ligne de convoyeur principal respective.
